# EUROPEAN PATENT APPLICATION

(11) **EP 2 078 996 A2**
(43) Date of publication of application: **15.07.2009**
(21) Application number: 08172525.1
(22) Date of filing: 22.12.2008
(51) Int. Cl.: G05D 1/02

(54) **Method and apparatus for planning path of mobile robot**

(30) Priority: 11.01.2008 KR 20080003556
(71) Applicant: Samsung Electronics Co., Ltd., Suwon-si, Gyeonggi-do (KR)
(72) Inventor: Myeong, Hyeon, Gyeonggi-do 449-712 (KR); Bang, Seok-Won, Gyeonggi-do 449-712 (KR)
(74) Representative: Grünecker, Kinkeldey, Stockmair & Schwanhäusser Anwaltssozietät

(57) **Abstract**

The apparatus includes a coarse map creating unit creating a coarse map which includes path information of the mobile robot; and a virtual door extracting unit extracting virtual doors which divide the coarse map into a plurality of sub regions, where the mobile robot sequentially cleans the sub regions one by one. The method includes creating a coarse map which includes path information of the mobile robot; extracting virtual doors which divide the coarse map into a plurality of sub regions; and sequentially cleaning the sub regions one by one.

## Description

### CROSS-REFERENCE TO RELATED APPLICATIONS

This application claims priority from Korean Patent Application No. 10-2008-0003556 filed on January 11, 2008 in the Korean Intellectual Property Office, the disclosure of which is incorporated herein by reference in its entirety.

### BACKGROUND

### 1. Field

The present invention relates to a mobile robot, and more particularly, to a method and apparatus for planning a path of a mobile robot, in which a coarse map of an entire region to be cleaned by the mobile robot is divided into a plurality of sub regions so that the mobile robot can clean the entire region on a sub region-by-sub region basis.

### 2. Description of the Related Art

Robots have been developed for industrial purposes and used for factory automation. Robots have also been used to perform tasks in place of human beings in extreme environments that human beings cannot access. In particular, household robots have played a major role in evolving heavy industry-centered robotics, which is limited to the development of industrial robots, to light industry-centered robotics. A typical example of the household robots includes cleaning robots. A cleaning robot includes a driving unit which drives the cleaning robot, a cleaning unit which performs a cleaning operation, and a position measuring unit which measures the position of the cleaning robot or a user's remote control.

The most basic and important function of a mobile robot, such as a cleaning robot, is to accurately identify its position. Methods of calculating the absolute position of a mobile robot include a method of implementing a beacon, which employs an ultrasonic sensor, at the home and a method of using an indoor global positioning system (GPS). In addition, methods of calculating the relative position of a mobile robot include a method of calculating the position of a mobile robot by measuring the rotational velocity and linear velocity of the mobile robot using an encoder and integrating the rotational velocity and the linear velocity, a method of calculating the position of a mobile robot by measuring the accelerated velocity of the mobile robot using an accelerometer and integrating the accelerated velocity twice, and a method of calculating the direction of a mobile robot by measuring the rotational velocity of the mobile robot using a gyrosensor and integrating the rotational velocity.

In order to perform a certain operation, such as cleaning, in a region, a mobile robot needs to create a map of the region. In this case, the mobile robot needs an algorithm for exploring an unknown region in addition to a simultaneous localization and mapping (SLAM) algorithm in order to create the map of the region. In a simple sense, the additional algorithm may be a method of identifying the shape of the entire region through wall following. In a more complex sense, the additional algorithm may be a method of planning a path of the mobile robot using an active SLAM algorithm. Even after creating the map of the region using the above methods, the mobile robot still needs coverage path planning in order to completely cover the entire region.

A cell decomposition method is widely used as a way to completely cover the entire region. According to the cell decomposition method, the entire region is divided into a plurality of cells, and a mobile robot performs its cleaning operation on a cell-by-cell basis.

A mobile root may create a two-dimensional (2D) map of an environment in which it is situated by using an infrared sensor, an ultrasonic sensor, a laser sensor or the like. This map is referred to as a grid map. Since the grid map is created based on sensor data, it contains a lot of uncertainties and errors.

An example of the cell decomposition method is a fine map in which the entire region is divided based on a precise grid map to plan a path of a mobile robot. Here, the precise grid map includes a plurality of cells, each cell measuring 1 to 2 cm in length and width. When this fine map is used, the mobile robot may be able to clean every corner of the entire region. However, when the grid map of the region is not yet completed, it is difficult to divide the entire region, which results in inefficient path planning. In addition, when the high-resolution grid map, i.e., the fine map, is used, the amount of memory and calculation required is increased. Thus, an embedded system cannot plan the path of the mobile robot in real time.

In order to overcome these drawbacks of the fine map, a coarse map, which includes a plurality of square cells of an equal size, may be used to quickly plan a path of a mobile robot, wherein each square cell of the coarse map measures several tens of centimeters in length and width. In this case, a coarse map of a size equal to that of a suction inlet of a mobile robot may be used to control a path along which the mobile robot moves, and the coarse map can be created in real time. For example, the coarse map may measure 20 to 25 centimeters in length and width. However, in this method, the mobile robot performs its cleaning operation in only one predetermined direction without considering the shape of the entire region, which is not only inefficient but also requires a long time for the mobile robot to clean the entire region. Consequently, this method has failed to satisfy the needs of users.

### SUMMARY

Aspects of the present invention provide a method and apparatus for planning a path of a mobile robot, in which a coarse map of an entire region to be cleaned by the mobile robot is divided into a plurality of sub regions so that the mobile robot can clean the entire region on a sub region-by-sub region basis.

However, aspects of the present invention are not restricted to the one set forth herein. The above and other aspects of the present invention will become more apparent to one of ordinary skill in the art to which the present invention pertains by referencing the detailed description of the present invention given below.

According to an aspect of the present invention, there is provided an apparatus for planning a path of a mobile robot. The apparatus includes: a coarse map creating unit creating a coarse map which includes path information of the mobile robot; and a virtual door extracting unit extracting virtual doors which divide the coarse map into a plurality of sub regions, wherein the mobile robot sequentially cleans the sub regions one by one.

According to another aspect of the present invention, there is provided a method of planning a path of a mobile robot. The method includes: creating a coarse map which includes path information of the mobile robot; extracting virtual doors which divide the coarse map into a plurality of sub regions; and sequentially cleaning the sub regions one by one.

### BRIEF DESCRIPTION OF THE DRAWINGS

The above and other aspects and features of the present invention will become more apparent by describing in detail exemplary embodiments thereof with reference to the attached drawings, in which:
FIG. 1 is a block diagram of a mobile robot according to an exemplary embodiment of the present invention;
FIG. 2 is a diagram for explaining a case where a coarse map creating unit included in the mobile robot of FIG. 1 provides attribute information in each cell of a coarse map according to an exemplary embodiment of the present invention;
FIGS. 3 and 4 are diagrams for explaining a case where the coarse map creating unit included in the mobile robot of FIG. 1 creates a coarse map using a water-filling method according to an exemplary embodiment of the present invention;
FIG. 5A shows an example of the entire region to be cleaned by the mobile robot of FIG. 1;
FIG. 5B shows an example of a coarse map created by the coarse map creating unit in the environment of FIG. 5A;
FIG. 6 shows a coarse map created by the coarse map creating unit according to an exemplary embodiment of the present invention;
FIG. 7 shows a road map created by a virtual door extracting unit, which is included in the mobile robot of FIG. 1, based on the coarse map of FIG. 6 according to an exemplary embodiment of the present invention;
FIG. 8 shows a configuration space created by the virtual door extracting unit based on the coarse map of FIG. 6 according to an exemplary embodiment of the present invention;
FIGS. 9A through 9C are diagrams for explaining a case where the virtual door extracting unit extracts virtual doors based on intersecting points of the road map of FIG. 7, which was created using the coarse map of FIG. 6, and the configuration space of FIG. 8 according to an exemplary embodiment of the present invention;
FIG. 10 shows virtual doors extracted from the coarse map of FIG. 6 by the virtual door extracting unit according to an exemplary embodiment of the present invention;
FIGS. 11A and 11B are diagrams showing cases where a path setting unit included in the mobile robot of FIG. 1 sets an optimal path of the mobile robot in each sub region of the coarse map of FIG. 6 according to an exemplary embodiment of the present invention;
FIG. 12 is a flowchart illustrating a method of planning a path of the mobile robot according to an exemplary embodiment of the present invention;
FIG. 13 is a flowchart illustrating a method of cleaning each sub region of the coarse map using the mobile robot according to an exemplary embodiment of the present invention;
FIG. 14 is a diagram for explaining a case where the mobile robot cleans a sub region according to an exemplary embodiment of the present invention; and
FIG. 15 is a diagram for explaining a case where the mobile robot moves to a next sub region after cleaning a current sub region according to an exemplary embodiment of the present invention.

### DETAILED DESCRIPTION OF EMBODIMENTS

Advantages and features of the present invention and methods of accomplishing the same may be understood more readily by reference to the following detailed description of exemplary embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

Hereinafter, exemplary embodiments of the present invention will be described with reference to block diagrams or flowchart illustrations. It will be understood that each block of the flowchart illustrations, and combinations of blocks in the flowchart illustrations, can be implemented by computer program instructions. These computer program instructions can be provided to a processor of a general purpose computer, special purpose computer, or other programmable data processing apparatus, such that the instructions, which execute via the processor of the computer or other programmable data processing apparatus, create means for implementing the functions specified in the flowchart block or blocks.

These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks.

The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

And each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit', as used herein, means, but is not limited to, a software or hardware component, such as a Field Programmable Gate Array (FPGA) or Application Specific Integrated Circuit (ASIC), which performs certain tasks. A unit may advantageously be configured to reside on the addressable storage medium and configured to execute on one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and units may be combined into fewer components and units or further separated into additional components and units.

Hereinafter, a method and apparatus for planning a path of a mobile robot according to exemplary embodiments of the present invention will be described with reference to the attached drawings.

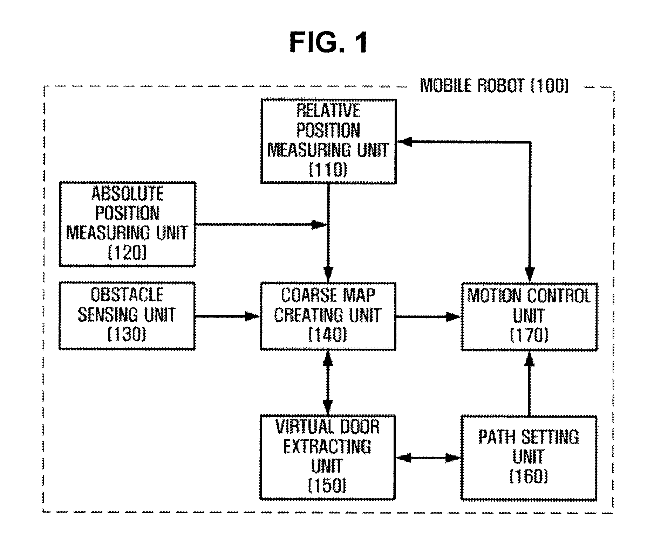

FIG. 1 is a block diagram of a mobile robot 100 according to an exemplary embodiment of the present invention. Referring to FIG. 1, the mobile robot 100 includes a relative position measuring unit 110, an absolute position measuring unit 120, an obstacle sensing unit 130, a coarse map creating unit 140, a virtual door extracting unit 150, a path setting unit 160, and a motion control unit 170.

The relative position measuring unit 110 may measure the position of the mobile robot 100 using a relative position recognizing module, such as an encoder, a gyro sensor or an accelerometer. For example, the encoder may be connected to driving wheels included in the motion control unit 170 and thus sense the rotational velocity of the driving wheels. If the rotation velocity sensed by the encoder is integrated, the position of (or distance traveled by) the mobile robot 100 and the head angle of the mobile robot 100 can be obtained. Generally, position and head angle are collectively referred to as a "pose." The relative position measuring unit 110 may also measure the position of the mobile robot 100 using an absolute position recognizing module.

The absolute position measuring unit 120 is a module used to calculate an absolute position. The absolute position measuring unit 120 may be a camera, which uses image information, or a range finder which uses distance information. If the absolute position measuring unit 120 is a camera, it may capture an image (hereinafter, referred to as an "area image") of an area around the mobile robot 100 to extract feature points. In this case, feature points denote points that represent unique features of a specified position. The absolute position measuring unit 120 may capture images of the ceiling, the wall, the floor and the like as area images. However, the image of the ceiling may be the most preferred area image since it hardly changes and contains lights which are appropriate for extracting feature points. The absolute position measuring unit 120 may include a charge coupled device (CCD), a complementary metal oxide semiconductor (CMOS), or any conventional image capturing device widely known to those of ordinary skill in the art to which the present invention pertains. The absolute position measuring unit 120 may further include an analog-to-digital converter (ADC) which converts an analog signal of a captured image into a digital signal.

In addition, the absolute position measuring unit 120 may create a feature map by matching feature points, which are obtained from an area image such as an image of the ceiling, with the position of the mobile robot 100. Thus, the pose, i.e., position and head angle, of the mobile robot 100 can be easily identified by comparing feature points obtained from a captured image to the feature map.

The obstacle sensing unit 130 may sense obstacles in the vicinity of the mobile robot 100 while the mobile robot 100 is moving. The obstacle sensing unit 130 may include an infrared sensor, an ultrasonic sensor, a bumper or the like.

The coarse map creating unit 140 may create a coarse map having a plurality of cells. Each cell of the coarse map may contain obstacle information and path information. That is, the coarse map creating unit 140 may measure the pose of the mobile robot 100 based on a feature map and provide obstacle information and path information at each position of the mobile robot 100 on the coarse map by using the pose information of the mobile robot 100 and the obstacle information provided by the obstacle sensing unit 130. Consequently, the coarse map creating unit 140 may create a path map.

The path information is used to determine the direction in which the mobile robot 100 is to move in order to carry out cleaning and map-creating operations. It is important to prevent the mobile robot 100 from re-passing through positions which it has already passed through by using the path information. The path information may include information on whether a specified cell has been cleaned and information on whether a current line containing a specified cell and another line directly under the current line have been cleaned. Using the path information provided in each cell of the coarse map, the coarse map creating unit 140 can identify a path along which the mobile robot 100 has traveled so far and determine the direction in which the mobile robot 100 is to move in order to clean the entire region.

According to the exemplary embodiment of the present invention, the coarse map creating unit 140 may create a path map based on a coarse map which includes a plurality of cells, each cell measuring several tens of centimeters in length and width. For example, when the mobile robot 100 measures approximately 40 cm in length and width, each cell of the coarse map may measure approximately 20 to 25 cm in length and width which are equal to the length and width of a suction inlet of the mobile robot 100. Since the size of each cell of the coarse map can be increased, the amount of calculation and memory required can be reduced.

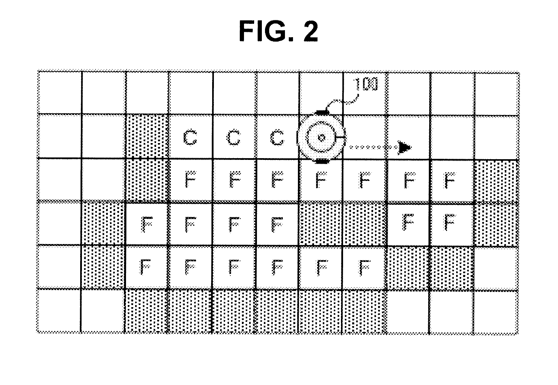

A case where the coarse map creating unit 140 according to the exemplary embodiment creates a coarse map will now be described as an example with reference to FIGS. 2 through 4.

FIG. 2 is a diagram for explaining a case where the coarse map creating unit 140 included in the mobile robot 100 of FIG. 1 provides attribute information in each cell of a coarse map according to an exemplary embodiment of the present invention.

Referring to FIG. 2, a coarse map includes a plurality of cells of a predetermined size, and each cell may include obstacle information and path information. Each cell of the coarse map may be marked as a blocked cell if an obstacle exists in the cell, a cleaned cell if the cell has been cleaned, or a filled cell if a current line including the cell and another line directly under the current line have been cleaned. On the coarse map, the blocked cell may be shaded, the cleaned cell may be indicated by reference character C, and the filled cell may be indicated by reference character F.

Indicating the cleaned cell and the filled cell may correspond to providing path information used to determine a cell to which the mobile robot 100 should move in order to carry out the cleaning operation. When a current cell is a cleaned cell, the current cell has been cleaned. Thus, when a current line including the current cell has been cleaned, all cells in the current line may be converted into filled cells.

According to the exemplary embodiment of the present invention, until both ends of a line, which includes a plurality of cells, are blocked by obstacles, the mobile robot 100 is moved to cells through which the mobile robot 100 has not yet passed. Then, when both ends of the line are blocked by the obstacles, the mobile robot 100 is moved to another line. To create a coarse map, this operation may be repeated until a looped curve is formed by the obstacles, which is referred to as a "water-filling method." That is, when the space inside the looped curve is filled up from bottom to top, it is completely cleaned.

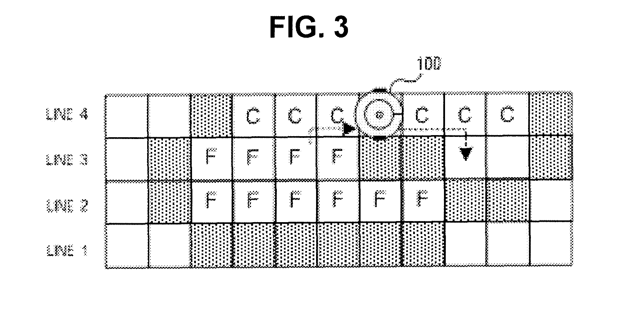

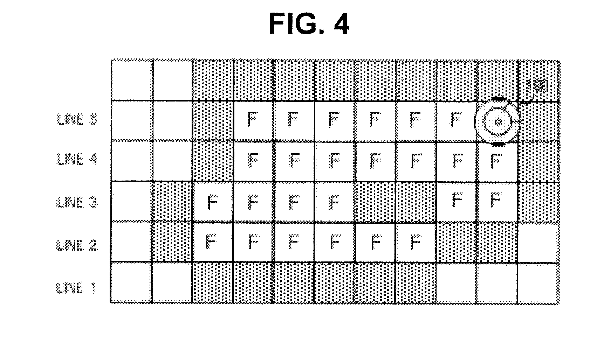

FIGS. 3 and 4 are diagrams for explaining a case where the coarse map creating unit 140 included in the mobile robot 100 of FIG. 1 creates a coarse map using the water-filling method according to an exemplary embodiment of the present invention.

First of all, the mobile robot 100 may move to the left from its initial position and clean a cell which has not been marked. After cleaning the cell, the mobile robot 100 may mark the cell as a cleaned cell on a coarse map. If the mobile robot 100 encounters an obstacle while moving to the left, a cell located at a position, which corresponds to that of the obstacle, may be marked as a blocked cell (shaded on the coarse map). Then, the mobile robot 100 may move to the right. Here, the mobile robot 100 does not need to clean cleaned cells which it passes through while moving to the right since it has already cleaned the cells. In addition, when the mobile robot 100 encounters an obstacle while moving to the right, a cell located at a position, which corresponds to that of the obstacle, may be marked as a blocked cell. After the mobile robot 100 finishes cleaning cells in a current line, both ends of which are blocked by obstacles, it may move to another line under the current line. The mobile robot 100 may repeat the above operation on each line of cells.

Referring to FIG. 3, a group of six cells included in line 2 are surrounded by blocked cells, which are on both sides of the group in line 2, and blocked cells which are in line 1 under line 2. Thus, the six cells may all be marked as filled cells. Similarly, a group of four cells included in line 3 are surrounded by the filled cells, which are in line 2 under line 3, and blocked cells which are on both sides of the group in line 3. Thus, the four cells may be marked as filled cells.

After marking the cells in lines 2 and 3 as the filled cells, the mobile robot 100 may return to line 4. Here, seven cleaned cells in line 4 cannot be converted into filled cells yet because two cells in line 3 directly under the two rightmost cleaned cells in line 4 have not been marked. Therefore, the mobile robot 100 may move to the two unmarked cells.

Referring to FIG. 4, after the mobile robot 100 marks the remaining, unmarked cells in lines 2 and 3 as filled or blocked cells, the seven cleaned cells in line 4 can finally be converted into filled cells. Then, the mobile robot 100 may move to line 5 and repeat its cleaning operation until blocked cells form a looped curve. When the space surrounded by blocked cells, i.e., the space inside the looped curve, is filled with filled cells, all cleaning operation is completed.

According to the exemplary embodiment of the present invention, since the coarse map creating unit 140 creates a path map based on a coarse map and plans a path, it can quickly create a path, along which the mobile robot 100 will move to clean the entire region, by doing little calculation and using a simple algorithm.

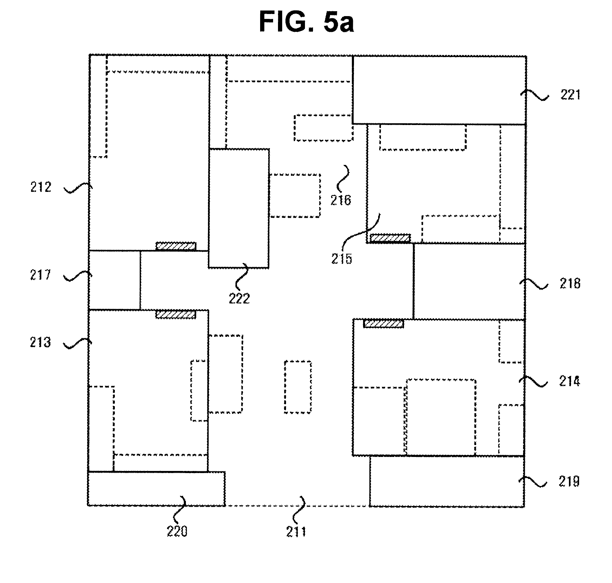

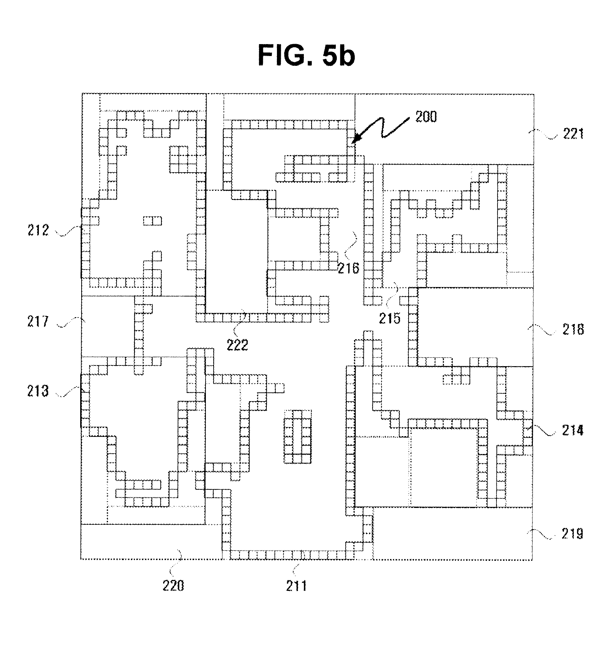

FIG. 5A shows an example of the entire region to be cleaned by the mobile robot 100. FIG. 5B shows an example of a coarse map 200 created by the coarse map creating unit 140 in an environment of FIG. 5A.

Referring to FIG. 5A, the entire region that the mobile robot 100 is to clean includes a living room 211, four bedrooms 212 through 215, a kitchen 216, two bathrooms 217 and 218, three terraces 219 through 221, and a built-in chest of drawers 222. In FIG. 5A, walls, which form, for example, the living room 211 and the bedrooms 212 through 215, are indicated by solid lines, and each piece of furniture is indicated by a dotted line. FIG. 5B shows only regions surrounded by obstacles, such as walls and furniture, i.e., blocked cells, in the coarse map 200 which is created by the coarse map creating unit 140.

Referring back to FIG. 1, the virtual door extracting unit 150 of the mobile robot 100 extracts virtual doors which divide the entire region of the coarse map 200 into a plurality of sub regions, each sub region being surrounded by obstacles. The virtual doors may denote boundaries that divide the entire region, which is to be cleaned by the mobile robot 100, into a plurality of sub regions. In addition, the sub regions may denote unit regions to be cleaned by the mobile robot 100. That is, the sub regions may include regions surrounded by walls and doors, such as bedrooms, and regions formed by furniture or pillars. Thus, the virtual doors may refer real boundaries which actually exist, such as real doors, and virtual boundaries which exist between pieces of furniture or pillars. Throughout the specification, walls, furniture and pillars will collectively be referred to as obstacles.

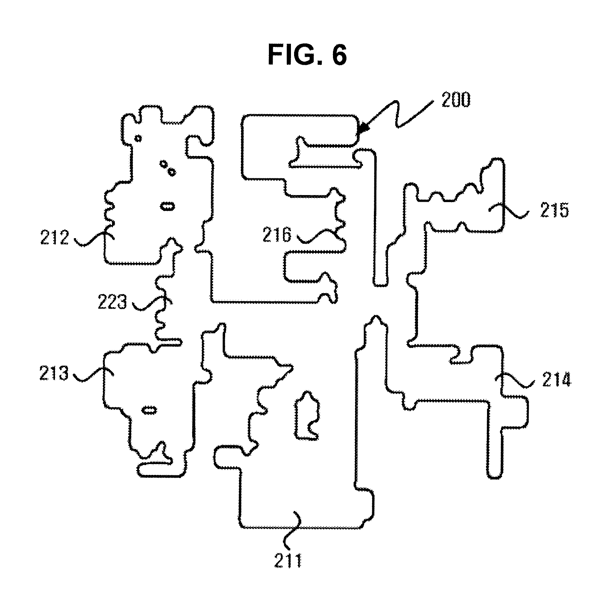

An exemplary embodiment in which the virtual door extracting unit 150 extracts virtual doors from the coarse map 200 will now be described with reference to FIGS. 6 through 10.

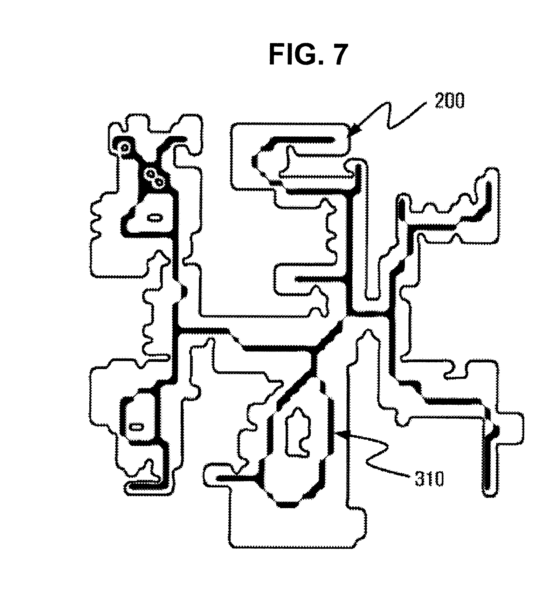

FIG. 6 shows a coarse map 200 created by the coarse map creating unit 140 according to an exemplary embodiment of the present invention. FIG. 7 shows a road map 310 created by the virtual door extracting unit 150 based on the coarse map 200 of FIG. 6 according to an exemplary embodiment of the present invention.

Referring to FIGS. 6 and 7, the virtual door extracting unit 150 may create the road map 310, which extends between obstacles, based on the coarse map 200. Desirably, the virtual door extracting unit 150 may generate a generalized Voronoi diagram in which each point placed between obstacles and separated from the obstacles by an equal distance is connected. As shown in FIG. 7, the road map 310 is a generalized Voronoi diagram in which each point placed between obstacles is separated from the obstacles by a maximum distance. Therefore, the mobile robot 100 can safely travel between the obstacles by using the road map 310. A morphology processing method used by the virtual door extracting unit 150 to generate the generalized Voronoi diagram is well known to those of ordinary skill in the art, and thus a detailed description thereof will be omitted.

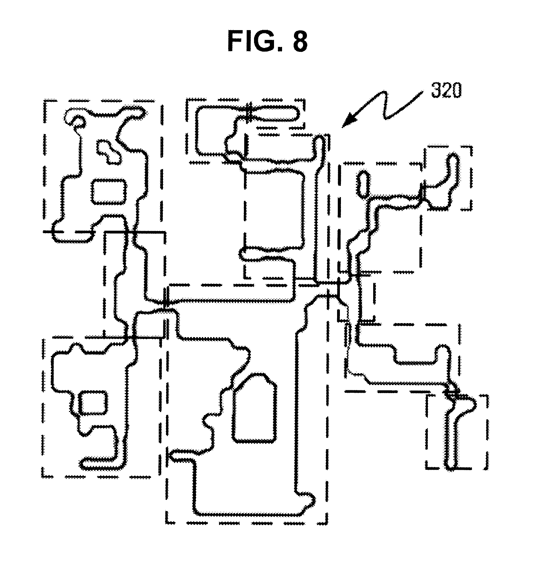

FIG. 8 shows a configuration space 320 created by the virtual door extracting unit 150 based on the coarse map 200 of FIG. 6 according to an exemplary embodiment of the present invention.

After creating the road map 310 (see FIG. 7), the virtual door extracting unit 150 may create the configuration space 320 based on the coarse map 200. The virtual door extracting unit 150 may erode the coarse map 200 by as much as half the size of a room door to create the configuration space 320. The created configuration space 320 may include a plurality of discrete regions. That is, if the coarse map 200 is eroded by as much as half the size of a room door, a passage of a size corresponding to half the size of the room door is blocked by erosion. Thus, two discrete regions are formed on both sides of the blocked passage. In FIG. 8, twelve discrete regions (indicated by dotted lines) are formed based on eleven blocked passages.

The configuration space 320 of FIG. 8 has been formed by the virtual door extracting unit 150 after the virtual door extracting unit 150 formed the road map 310 based on the coarse map 200. However, the virtual door extracting unit 150 may form the configuration space 320 before the road map 310.

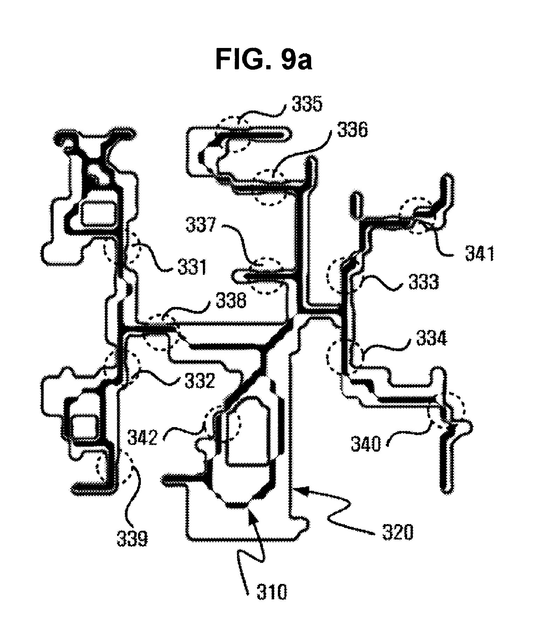

FIGS. 9A through 9C are diagrams for explaining a case where the virtual door extracting unit 150 extracts virtual doors based on intersecting points of the road map 310 of FIG. 7, which was created using the coarse map 200 of FIG. 6, and the configuration space 320 of FIG. 8 according to an exemplary embodiment of the present invention.

Referring to FIGS. 9A through 9C, the virtual door extracting unit 150 may obtain intersecting points of the road map 310, which was created based on the coarse map 200, and the configuration space 320. The intersecting points may be formed in blocked passages of the configuration space 320. In FIG. 9A, twelve intersecting points 331 through 342 may be obtained. The obtained intersecting points 331 through 342 may be candidate positions where virtual doors exist.

From the obtained intersecting points 331 through 342, the virtual door extracting unit 150 may extract the intersecting points 331 through 341, each of which is adjacent to at least two discrete regions. That is, the virtual door extracting unit 150 may extract only the intersecting points 331 through 341, each connecting two discrete regions in the road map 310, from the obtained intersecting points 331 through 342. Thus, as shown in FIG. 9A, while the intersecting point 342 is where the road map 310 and the configuration space 320 cross each other, it may not be extracted since it connects the same regions, i.e., the living room 211, in the road map 310.

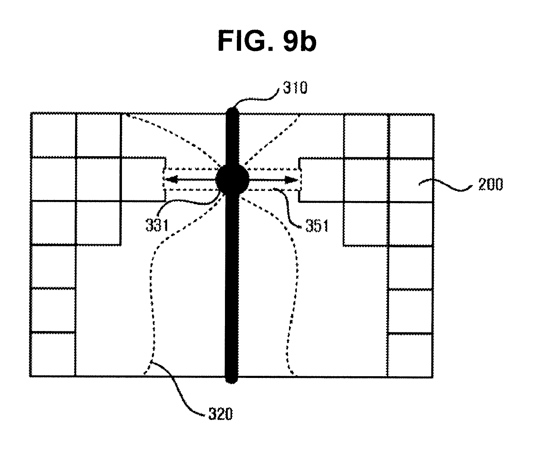

After the intersecting points 331 through 341, each connecting two discrete regions, are extracted from the road map 310, a virtual line may be drawn from, for example, the intersecting point 331 to obstacles, which are on both sides of the line, in a direction perpendicular to the road map 310. As a result, a virtual door 351 may be created as shown in FIG. 9B.

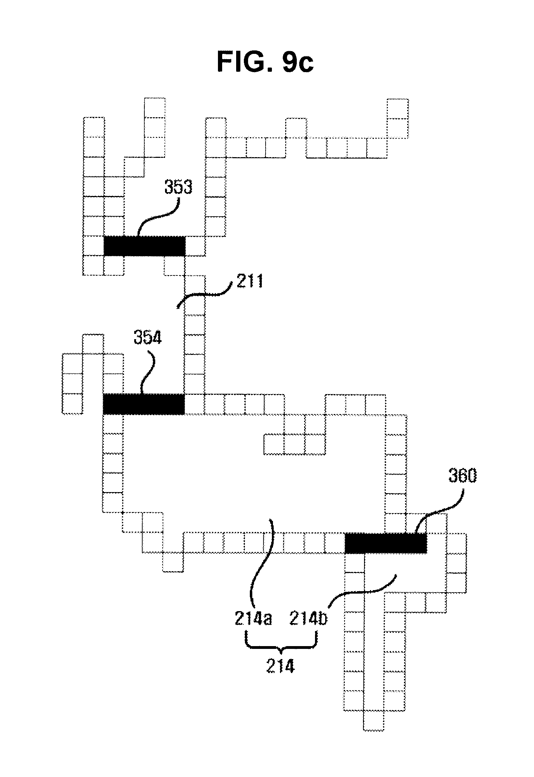

The virtual door extracting unit 150 may merge small sub regions from among a plurality of sub regions defined by virtual doors into a single sub region. That is, referring to FIG. 9C, the bedroom 214 is divided into two sub regions 214a and 214b by a virtual door 360. However, since the two sub regions 214a and 214b are small, they may be merged into a single sub region, i.e., the bedroom 214 as a whole.

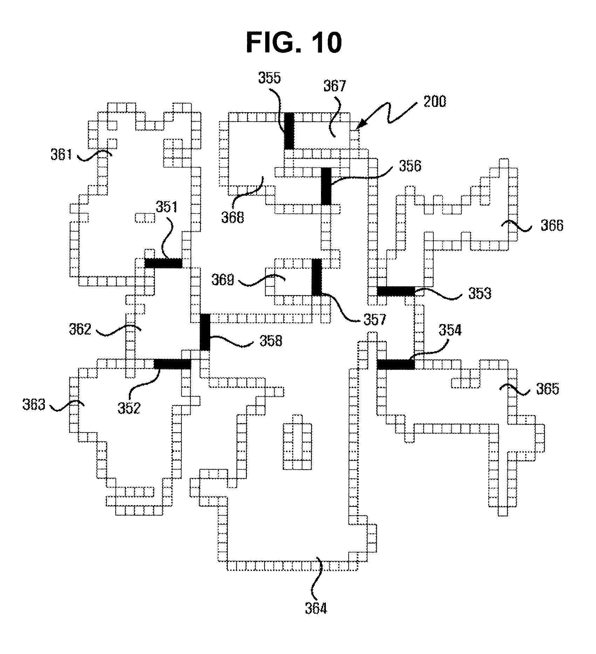

FIG. 10 shows virtual doors extracted from the coarse map 200 of FIG. 6 by the virtual door extracting unit 150 according to an exemplary embodiment of the present invention.

Referring to FIG. 10, the virtual door extracting unit 150 may extract eight virtual doors 351 through 358 from the coarse map 200 of the entire region which is to be cleaned by the mobile robot 100. From among the extracted virtual doors 351 through 358, the virtual doors 351 through 354 are real boundaries since they match doors of the bedrooms 212 through 215. In addition, the virtual doors 355 through 358 are virtual boundaries existing between pieces of furniture or pillars. Therefore, the coarse map 200 may include nine sub regions 361 through 369.

The mobile robot 100 according to the exemplary embodiment divides the coarse map 200 of the entire region, which is to be cleaned, into a plurality of sub regions when planning its path and cleans the entire region on a sub region-by-sub region basis, thereby enhancing the efficiency of its cleaning operation.

Referring back to FIG. 1, the path setting unit 160 of the mobile robot 100 may set a path (hereinafter, referred to as an optimal path), along which the mobile robot 100 can travel within the shortest time, in each sub region.

From among all paths that can be created in each sub region based on a starting point of the mobile robot 100 and a direction in which the mobile robot 100 is to move, the path setting unit 160 may determine a path along which the mobile robot 100 can travel within the shortest time as the optimal path. That is, the mobile robot 100 may move in a horizontal (transverse) or vertical (longitudinal) direction and start from any one of four starting points (a top left corner, a bottom left corner, a top right corner and a bottom right corer). Thus, a total of eight paths can be created in each sub region, and the path setting unit 160 may determine one of the eight paths as the optimal path.

The optical path may also refer to a path including a minimum number of locations where the mobile robot 100 encounters an obstacle. This is because the number of times that the mobile robot 100 has to rotate in order to change lines is reduced when the mobile robot 100 travels along a path including a smaller number of locations where the mobile robot 100 encounters an obstacle, which results in a reduction in the traveling time of the mobile robot 100. It should, however, be noted that the number of locations where the mobile robot 100 encounters an obstacle actually depends on a starting point of the mobile robot 100, the shape of each sub region, and a direction in which the mobile robot 100 is to move. Thus, when the starting point of the mobile robot 100, the shape of a sub region, and the direction in which the mobile robot 100 is to move are not determined, a method of calculating the number of locations where the mobile robot 100 encounters an obstacle needs to be simplified.

In an exemplary embodiment, the path setting unit 160 may set a path, which includes a minimum number of locations where each line composed of one or more cells encounters an obstacle, as an optimal path in each sub region. Since obstacles exist on both sides of a line, the number of locations where the line encounters an obstacle is two (that is, twice the number of lines). Therefore, the path setting unit 160 may compare the number of horizontal lines to that of vertical lines in each sub region and set a path having a smaller number of lines as the optimal path of the mobile robot 100.

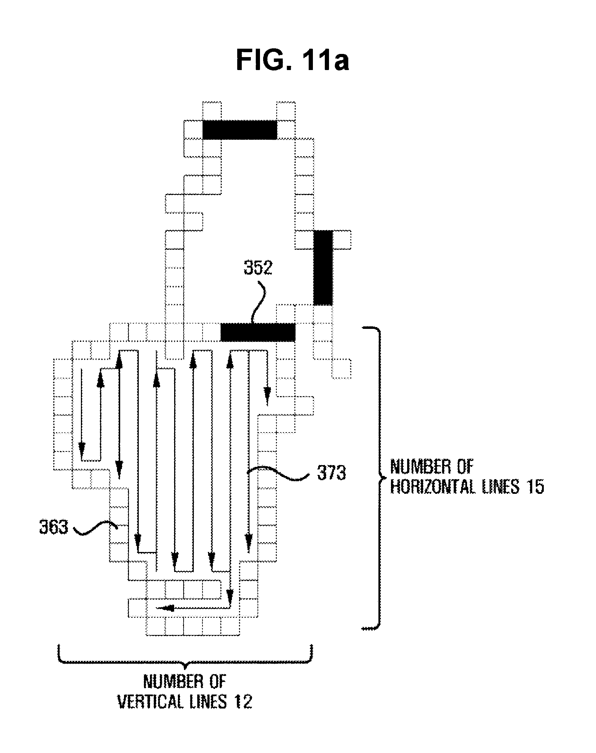

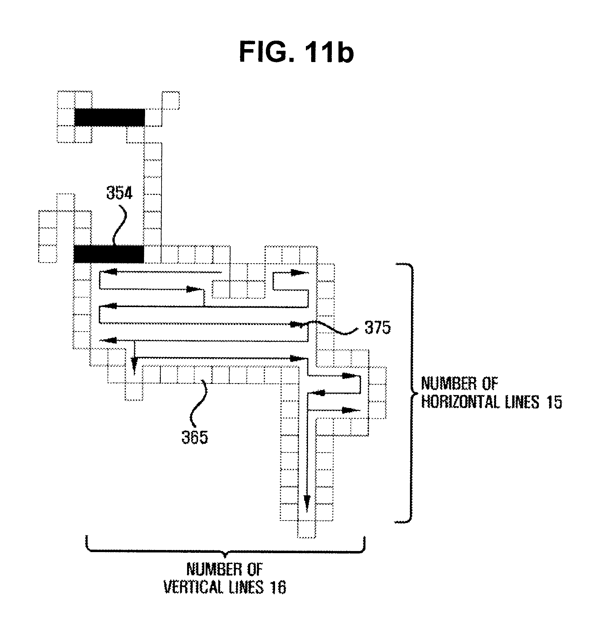

FIGS. 11A and 11B diagrams showing cases where the path setting unit 160 included in the mobile robot 100 of FIG. 1 sets an optimal path of the mobile robot 100 in each sub region of the coarse map 200 of FIG. 6 according to an exemplary embodiment of the present invention.

FIG. 11A shows a case where the path setting unit 160 sets an optimal path in a sub region 363 at the bottom left of the coarse map 200, that is, the bedroom 213 surrounded by a door and walls. Referring to FIG. 11A, in the sub region 363, the number of horizontal lines is 15, and the number of vertical lines is 12. Therefore, the optimal path of the mobile robot 100 in the sub region 363 is to move along the vertical lines.

On the other hand, FIG. 11B shows a case where the path setting unit 160 sets an optimal path 375 in a sub region 365 at the bottom right of the coarse map 200, that is, the bedroom 214 surrounded by a door and walls. Referring to FIG. 11B, in the sub region 365, the number of horizontal lines is 15, and the number of vertical lines is 16. Therefore, the optimal path 375of the mobile robot 100 in the sub region 365 is to move along the horizontal lines.

In the above cases, the optimal path of the mobile robot 100 is determined based on the number of locations where each horizontal or vertical line meets an obstacle. However, the present invention is not limited thereto, and the method of determining the optimal path of the mobile robot 100 may be modified by those of ordinary skill in the art.

The mobile robot 100 according to the exemplary embodiment sets an optimal path in each sub region to clean, thereby reducing the time required to perform a cleaning operation and enhancing the efficiency of its cleaning operation.

Referring back to FIG. 1, the motion control unit 170 controls the mobile robot 100 to move to a position intended by the coarse map creating unit 140. The motion control unit 170 may include a plurality of driving wheels, a motor which drives the driving wheels, and a motor controller which controls the motor. For a linear motion of the mobile robot 100, the driving wheels may be rotated at the same speed. For a curvilinear motion of the mobile robot 100, the driving wheels may be rotated at different speeds. Generally, each driving wheel is connected to an encoder.

The mobile robot 100 may include a memory (not shown) which stores the coarse map 200 created by the coarse map creating unit 140 and a path created by the path creating unit 160. The memory may be a nonvolatile memory such as a read-only memory (ROM), a programmable read-only memory (PROM), an erasable programmable read-only memory (EPROM), an electrically erasable programmable read-only memory (EEPROM) or a flash memory, a volatile memory such as a random access memory (RAM), a storage medium such as a hard disk or an optical disk, or may be implemented in different forms known to the art to which the present invention pertains.

The operation of the mobile robot 100 configured as described above will now be described.

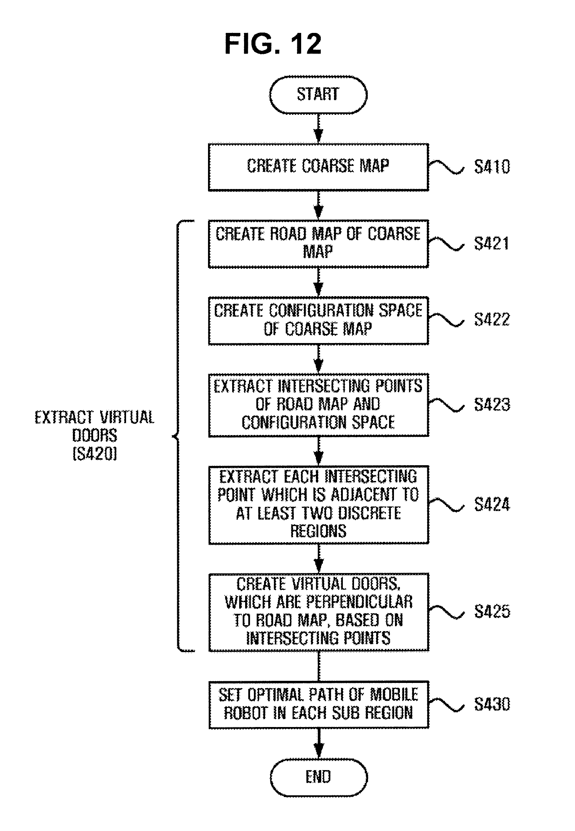

FIG. 12 is a flowchart illustrating a method of planning a path of the mobile robot 100 according to an exemplary embodiment of the present invention.

Referring to FIG. 12, the coarse map creating unit 140 of the mobile robot 100 may create the coarse map 200 while the mobile robot 100 moves in the entire region (operation S410). Once the coarse map 200 is created, the virtual door extracting unit 150 may extract virtual doors from the coarse map 200 (operation S420).

In order to extract the virtual doors, the virtual door extracting unit 150 may create the road map 310 based on the coarse map 200 (operation S420) and create the configuration space 320 (operation S422). An order in which the virtual door extracting unit 150 creates the road map 310 and the configuration space 320 may be changed. Next, the virtual door extracting unit 150 may extract all intersecting points of the created road map 310 and the configuration space 320 (operation S423) and finally extract intersecting points, each of which is adjacent to at least two discrete regions, from the extracted intersecting points (operation S424). Then, the virtual door extracting unit 150 may create a virtual door which extends from each finally extracted intersecting point in a direction perpendicular to the road map 310 (operation S425). In addition, small sub regions from among a plurality of sub regions defined by virtual doors may be merged into a single sub region.

After the virtual doors are extracted, the path setting unit 160 may set an optimal path in each sub region (operation S430).

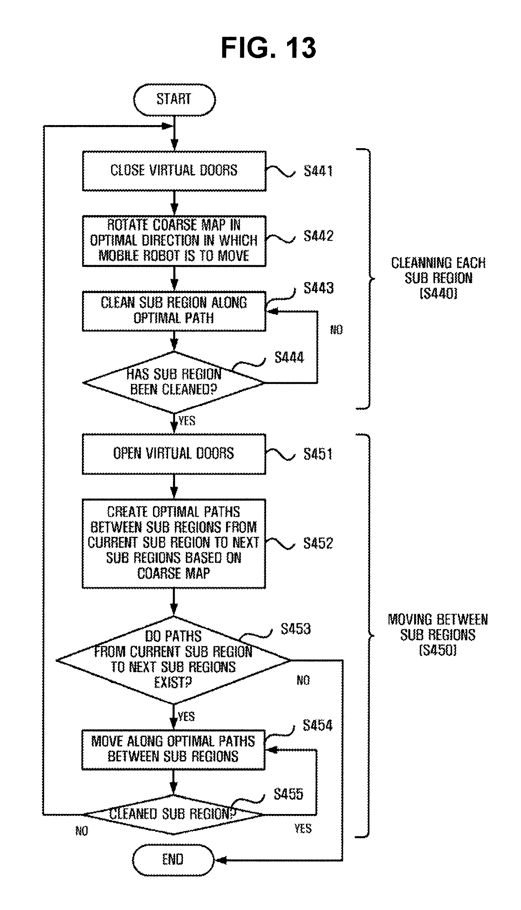

FIG. 13 is a flowchart illustrating a method of cleaning each sub region of the coarse map 200 of FIG. 6 using the mobile robot 200 according to an exemplary embodiment of the present invention.

As described above, the virtual door extracting unit 150 extracts virtual doors from the coarse map 200, divides the entire region into a plurality of sub regions based on the virtual doors, and sets an optimal path in each sub region. Then, the motion control unit 170 controls the mobile robot 200 to move in each sub region along the set optimal path and cleans each sub region (operation S440).

To clean a sub region, the mobile robot 100 may close all virtual doors on the coarse map 200 (operation S441), rotate the coarse map 200 in an optimal direction in which the mobile robot is to move (operation S442), and clean the sub region along the set optimal path (operation S443). The mobile robot 100 determines whether the sub region has been cleaned (operation S444). If the sub region has been cleaned, the mobile robot 100 may move to a next sub region to clean.

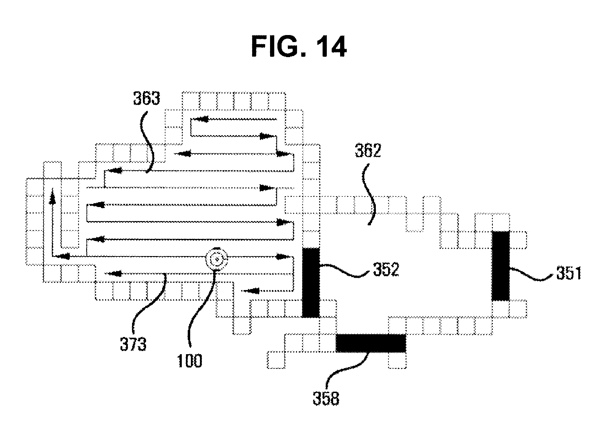

FIG. 14 is a diagram for explaining a case where the mobile robot 100 cleans a sub region according to an exemplary embodiment of the present invention. Referring to FIG. 14, the mobile robot 100 cleans the bedroom 213 of FIG. 6, i.e., the sub region 363 at the bottom left of the coarse map 200 shown in FIG. 11A. While virtual doors 351, 352 and 358 are closed, the mobile robot 100 cleans the sub region 363 while moving along a path 373 created by the path setting unit 160. It can be understood from FIG. 14 that the coarse map 200 has been rotated in an optimal direction for the cleaning operation.

Referring back to FIG. 13, in order to move to next sub regions (operation S450), the mobile robot 100 may open all virtual doors (operation S451) and create optimal paths from the current sub region to the next sub regions based on the coarse map 200 (operation S452). Then, the mobile root 100 may determine whether the paths from the current sub region to the next sub regions exist (operation S453). When the paths from the current sub region to the next sub regions do not exist, all sub regions may have been cleaned. Thus, the entire cleaning operation may be terminated.

If the mobile robot 100 determines in operation S453 that the paths from the current sub region to the next sub regions exist, it may move to one of the next sub regions along a corresponding path (operation S454). Then, the mobile robot 100 determines whether the sub region, to which it has moved, has been cleaned (operation S455). If the sub region has already been cleaned, the mobile robot 100 may move to another one of the next sub regions (operation S454). If the mobile robot 100 determines in operation S455 that the sub region has not been cleaned, it closes all virtual doors on the coarse map 200 (operation S441) and cleans the sub region.

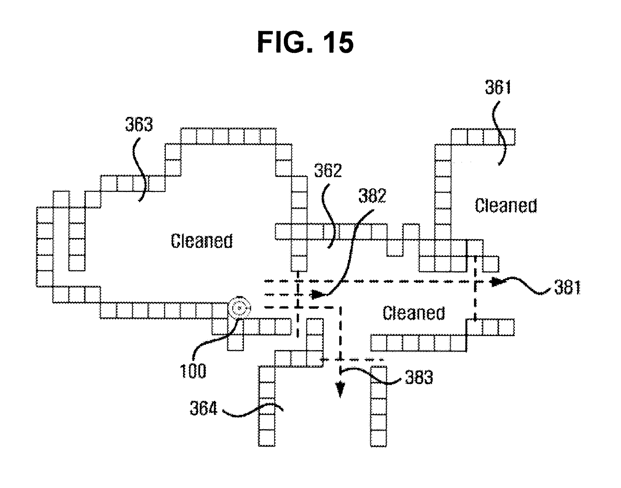

FIG. 15 is a diagram for explaining a case where the mobile robot 100 moves to a next sub region after cleaning a current sub region according to an exemplary embodiment of the present invention. Specifically, FIG. 15 shows a case where, after cleaning the sub region 363 shown in FIG. 14, the mobile robot 100 sets paths 381 through 383 from the sub region 363 to next sub regions 361, 362 and 364 while all virtual doors are open.

After setting the paths 381 through 383 from the cleaned sub region 363 to the next sub regions 361, 362 and 364, the mobile robot 100 may move along the set paths 381 through 383. If the mobile robot 100 moves to the sub regions 361 and 362 which have already been cleaned, the mobile robot 100 may move to another sub region. If the mobile robot 100 moves to the sub region 364 which has not been cleaned, it closes all virtual doors and cleans the sub region 364.

As described above, a mobile robot according to the present invention divides a coarse map of the entire region, which is to be cleaned, into a plurality of sub regions and plans its path based on the coarse map. Then, the mobile robot cleans the entire region on a sub region-by-sub region basis, thereby enhancing the efficiency of its cleaning operation. In addition, since the mobile robot sets an optimal path for each sub region, it can reduce the time required to clean the entire region.

The present invention relates to a method of planning a path of a mobile robot. In this specification, a cleaning robot has been described as an example. However, the present invention may also be applied to all types of robots, such as lawn mowing robots and painting robots, which are required to move in specified areas.

While the present invention has been particularly shown and described with reference to exemplary embodiments thereof, it will be understood by those of ordinary skill in the art that various changes in form and details may be made therein without departing from the spirit and scope of the present invention as defined by the following claims. The exemplary embodiments should be considered in a descriptive sense only and not for purposes of limitation. Therefore, the scope of the invention is defined not by the detailed description of the invention but by the following claims, and all differences within the scope will be construed as being included in the present invention.

## Claims

1. An apparatus for planning a path of a mobile robot, the apparatus comprising:
a coarse map creating unit creating a coarse map which comprises path information of the mobile robot; and
a virtual door extracting unit extracting virtual doors which divide the coarse map into a plurality of sub regions,
wherein the mobile robot sequentially cleans the sub regions one by one.

2. The apparatus of claim 1, wherein the path information comprises information on whether a specified cell has been cleaned and information on whether a current line comprising the specified cell and another line directly under the current line have been cleaned.

3. The apparatus of claim 1, wherein each of the virtual doors is extracted by using a road map, which extends between obstacles, and a configuration space which is created based on the coarse map.

4. The apparatus of claim 3, wherein each of the virtual doors is formed by drawing a virtual line from each intersecting point of the road map and the configuration space to the obstacles in a direction perpendicular to the road map.

5. The apparatus of claim 4, wherein the road map is a generalized Voronoi diagram in which each point placed between the obstacles and separated from the obstacles by an equal distance is connected.

6. The apparatus of claim 4, wherein the configuration space is created by eroding the coarse map as much as half the size of a room door, and a plurality of discrete regions are formed within the configuration space.

7. The apparatus of claim 6, wherein the virtual doors are extracted based on the intersecting points, each of which is adjacent to at least two of the discrete regions.

8. The apparatus of claim 1, further comprising a path setting unit setting a path, along which the mobile robot can move within a shortest time, in each of the sub regions.

9. The apparatus of claim 8, wherein the path enables the mobile robot to move within the shortest time from among all paths which can be created in each of the sub regions based on a starting point of the mobile robot and a direction in which the mobile robot is to move.

10. The apparatus of claim 1, wherein the mobile robot closes the virtual doors when cleaning one of the sub regions and opens the virtual doors when moving between the sub regions.

11. A method of planning a path of a mobile robot, the method comprising:
creating a coarse map which comprises path information of the mobile robot;
extracting virtual doors which divide the coarse map into a plurality of sub regions; and
sequentially cleaning the sub regions one by one.

12. A mobile cleaning robot, comprising:
a relative position measuring unit;
an absolute position measuring unit;
an obstacle sensing unit;
a coarse map creating unit to create a coarse map which includes path information for the mobile robot;
a virtual door extracting unit to extract virtual doors which divide the coarse map into a plurality of sub regions;
a path setting unit to set a path, along which the mobile cleaning robot can move within a shortest time, in each of the sub regions; and
a motion control unit to move the mobile robot to sequentially clean the sub regions one by one.

13. The mobile cleaning robot of claim 12, wherein the path information comprises information on whether a specified cell has been cleaned and information on whether a current line comprising the specified cell and another line directly under the current line have been cleaned.

14. The mobile cleaning robot of claim 12, wherein each of the virtual doors is extracted by using a road map, which extends between obstacles, and a configuration space which is created based on the coarse map, and
each of the virtual doors is formed by drawing a virtual line from each intersecting point of the road map and the configuration space to the obstacles in a direction perpendicular to the road map.

15. The mobile cleaning robot of claim 14, wherein the road map is a generalized Voronoi diagram in which each point placed between the obstacles and separated from the obstacles by an equal distance is connected.
